Europäisches Patentamt

European Patent Office

Office européen des brevets

(11) Publication number: **0 033 148**
A1

(12)

# EUROPEAN PATENT APPLICATION

(21) Application number: 81100510.7

(22) Date of filing: 23.01.81

(51) Int. Cl.³: **B 01 D 13/04**
B 01 D 13/00, B 01 D 31/00

(30) Priority: 25.01.80 JP 8149/80
25.01.80 JP 8150/80

(43) Date of publication of application:
05.08.81 Bulletin 81/31

(84) Designated Contracting States:
BE DE FR GB IT NL

(71) Applicant: SUMITOMO CHEMICAL COMPANY, LIMITED
15 Kitahama 5-chome Higashi-ku
Osaka-shi Osaka-fu(JP)

(72) Inventor: Fukushima, Nobuo
4396-14, Sakamotohonmachi
Otsu-shi(JP)

(72) Inventor: Nakamura, Kismishige
13-801, Mizuo-3-chome
Ibaraki-shi(JP)

(72) Inventor: Kikui, Hitoshi
2-1, Kuwatacho
Ibaraki-shi(JP)

(74) Representative: Vossius.Vossius.Tauchner.Heunemann.Rauh
Siebertstrasse 4 P.O. Box 86 07 67
D-8000 München 86(DE)

(54) Tubular membrane module element and process for producing same.

(57) The tubular membrane module element (5) comprises a water-permeable pressure supporting tube (4) and a semipermeable membrane element (20) fitted to the internal surface of the pressure supporting tube (4). As semipermeable membrane element (20) a membrane tube is used, which is obtained by connecting a water-impermeable tape (2) and a semipermeable membrane tape (1) along their longitudinal edges, preferably by sticking with an adhesive (3, 3'), the outer diameter of the membrane tube being larger than the inner diameter of the pressure supporting tube (4).

The process for producing the tubular membrane module element (5) comprises forming the semipermeable membrane element (20) and then inserting it into the pressure supporting tube (4). The tubular membrane module element (5) exhibits stable performance for a long period of time.

FIG. 2

EP 0 033 148 A1

Our Ref.: P 973 EP; Case: A5178-02

SUMITOMO CHEMICAL COMPANY, LIMITED, Osaka / Japan

" Tubular Membrane Module Element and Process for Producing Same "

This invention relates to a tubular membrane module element having a structure in which a semipermeable membrane such as a reverse-osmosis membrane, an ultrafiltration membrane or the like which is widely utilized for desalinization of sea water, treatment of industrial waste water, concentration of foods and the like is fitted to the internal surface of a water-permeable pressure supporting tube, and a process for producing the tubular membrane module element.

Semipermeable membrane modules which are now widely used are roughly classified according to their structures into a hollow fiber type, a spiral type, a tubular type and a plate-and-frame type, and are properly used depending upon purposes. Among them, tubular type semipermeable membrane modules are advantageous in that pretreatment of the membrane - can be simplified, fouling substances formed on the membrane can relatively easily be washed off, and the membrane can easily be exchanged at the working site. Therefore, they are often employed in the fields of recovery of valuable materials from waste water, concentration of foods, and treatment of waste water.

As processes for forming internal pressure type tubular membrane module elements in which a semipermeable membrane is fitted to the internal surface of a pressure supporting tube, there is generally used a process comprising forming a tubular membrane by thinly flow casting a cast solution dope onto the internal surface of a stainless steel tube or a glass tube, and then inserting the tubular membrane into the water permeable pressure supporting tube.

Therefore, there has heretofore been employed a process comprising forming a tubular membrane having an outer diameter smaller than the inner diameter of the pressure supporting tube, inserting the tubular membrane into the pressure supporting tube, and then applying internal pressure to the tubular membrane to increase its diameter, thereby bringing it into close contact with the pressure supporting tube. For example, there have been disclosed inventions relating to the difference between inner diameters of pressure supporting tubes and diameters of tubular semipermeable membranes in Published Unexamined Japanese Patent Application Nos. 115681/78 and 125978/78. When a tubular membrane whose outer diameter is smaller than the inner diameter of the pressure supporting tube is inserted into the supporting tube and the membrane is expanded by applying thereto internal pressure as described in Published Unexamined Japan. Pat. Appln. No. 125978/78, there arises the problem of a decrease in the solute rejection of the tubular membrane. On the other hand, when the outer diameter of the tubular membrane is larger than the inner diameter of the pressure supporting tube, wrinkles are produced on the surface of the tubular membrane when the tubular membrane module element is operated by applying internal pressure thereto, and the wrinkles cause a decrease in the solute rejection. In the ideal case the inner diameter of the pressure supporting tube is just the same as the outer diameter of the tubular membrane, but this is very difficult to achieve, because variations in these values necessarily appear at the time of forming the pressure supporting tube and the tubular membrane.

The present inventors have made extensive studies to find that the problem mentioned above can be solved by using a semipermeable membrane element produced by connecting a semipermeable tape and a water-impermeable tape with each other along their longitudinal edges.

This invention provides a tubular membrane module element comprising a water-permeable pressure supporting tube and a semipermeable membrane element fitted to the internal surface of the pressure supporting tube, characterized in that the semipermeable membrane element is a membrane tube comprising a water-impermeable tape and a semipermeable membrane tape connected with each other along their longitudinal edges. Preferably the two tapes are overlapping and sticked together with an adhesive, the outer diameter of this membrane tube being larger than the inner diameter of the pressure supporting tube.

This invention also provides a process for producing a tubular membrane module element comprising a water permeable pressure supporting tube and a semipermeable membrane element fitted to the internal surface of the aforesaid pressure supporting tube, the /comprising forming a semipermeable membrane element having an outer diameter larger than the inner diameter of the pressure supporting tube by connecting a water-impermeable tape and a semipermeable membrane tape along their preferably overlapping longitudinal edges. Preferably the two tapes are connected by sticking with an adhesive one side of each tape together while keeping at least the semipermeable membrane tape flat. Then the semipermeable membrane element is inserted into the pressure suuporting tube.

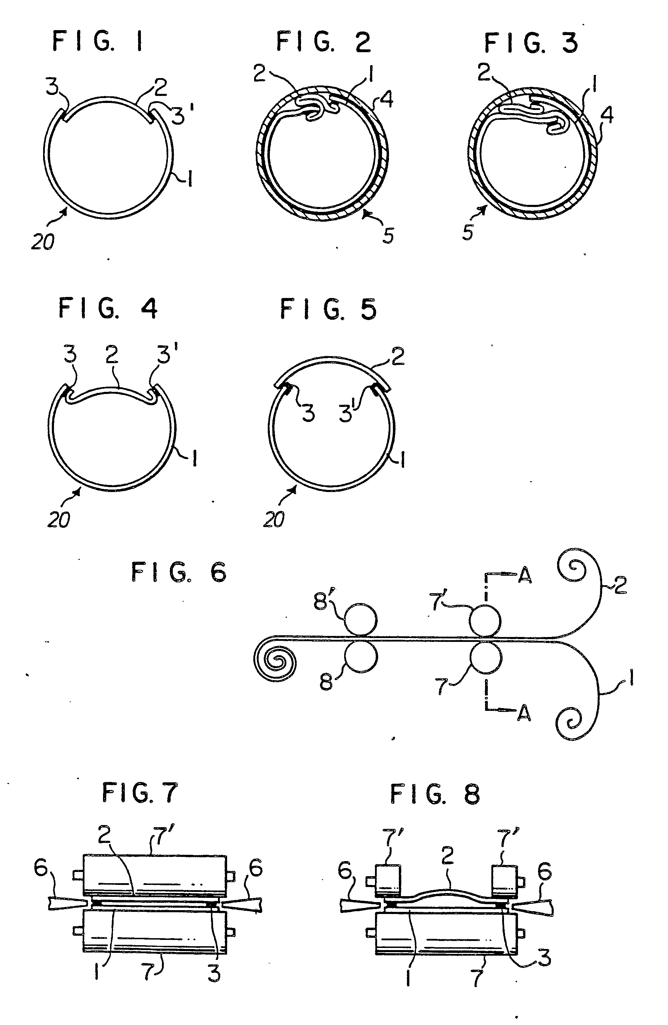

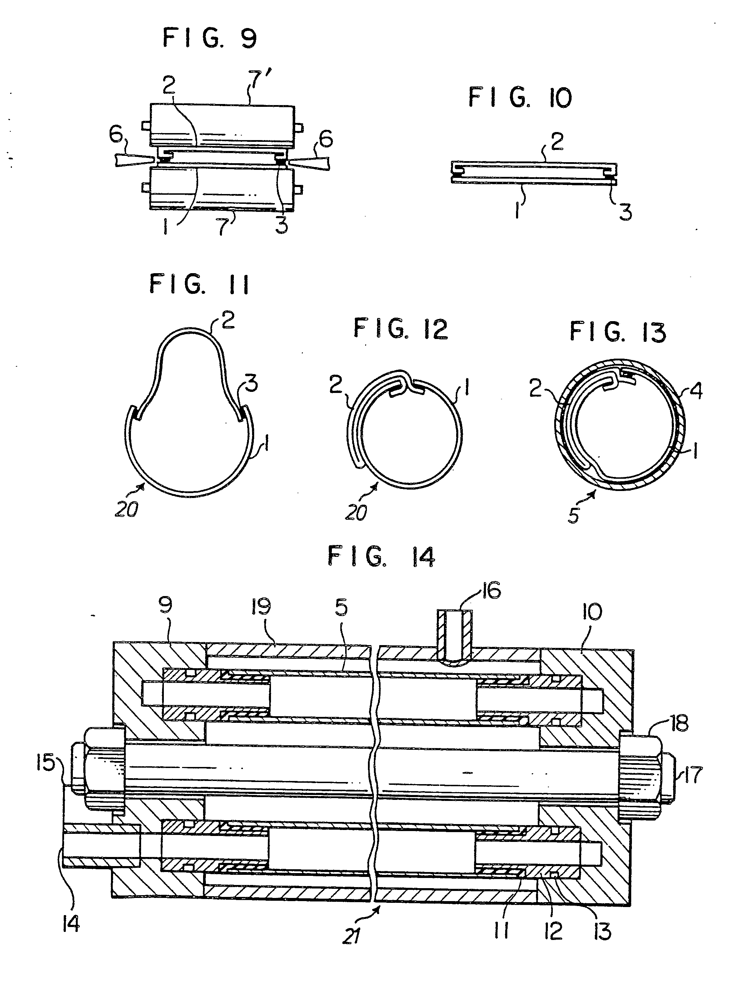

In the attached drawings, Figure 1 is a cross-sectional view of an example of the semipermeable membrane element used in this invention; Figure 2 is a cross-sectional view of a tubular membrane module element into which the semipermeable membrane element of Figure 1 is fitted; Figure 3 is a cross-sectional view of another example of the tubular membrane module element of this invention; Figures 4 and 5 are cross-sectional views of other examples of the semipermeable membrane element used in this invention; Figure 6 is a schematic view showing a sticking method used in this invention; Figures 7 to 9 are cross-sectional views of examples of three sticking methods taken along the line A-A of Figure 6; Figure 10 is a cross-sectional view of the semipermeable membrane element after sticking and before forming into a tubular shape; Figures 11 and 12 are cross-sectional views showing a process of forming the semipermeable membrane element into a tubular shape; Figure 13 is a cross-sectional view of a tubular membrane module element into which the semipermeable membrane element of Figure 12 is fitted; and Figure 14 is a vertical  sectional view of a tubular module into which the tubular membrane module elements of this invention are incorporated.

The characteristics of this invention are more clearly explained below referring to Figures 1 and 2 showing an example of this invention.  Figure 1 is a cross-sectonal view of a semipermeable membrane element 20 used in this invention, in which numeral 1 denotes a semipermeable membrane tape and numeral 2 a water-impermeable tape, and both sides  or edges /of the semipermeable membrane tape 1 are sticked on both sides  or edges /of the water-impermeable tape 2 with an adhesive 3 and 3'.  The semi-permeable membrane element 20/ is inserted into a pressure supporting tube 4 having an inner diameter smaller than the outer diameter of the semipermeable membrane element, so that the water-impermeable tape may be bent as shown in Figure 2, thus forming a tubular membrane module element 5.

Owing to such a structure of the tubular membrane module element 5/, the semipermeable membrane is not stretched even when operated , while the tubular membrane module element is under internal pressure,

and the semipermeable membrane element can be fitted tightly into the internal surface of the pressure supporting tube without producing wrinkles on the

0033148

surface of the semipermeable membrane.

The outer diameter of the semipermeable membrane element 20 is sufficient if only it is larger than the inner diameter of the pressure supporting tube 4. The width of the semipermeable membrane tape 1 may be less than the value obtained by multiplying the inner diameter of the pressure supporting tube 4 by the circular constant ($\pi$), although no trouble occurs even if it is more than the aforesaid value. Figure 3 shows an example of the case where the width of the semipermeable membrane tape is larger than the value obtained by multiplying the inner diameter of the pressure supporting tube by the circular constant.

The structure of the semipermeable membrane element 20 may be either that shown in Figure 1 or those shown in Figures 4 and 5. The important thing is that a solution to be treated should not leak out from the joint portions between the semipermeable membrane tape and the water-impermeable tape during the use of the tubular module.

The semipermeable membrane tape of this invention may be either that formed from a semipermeable membrane alone or that reinforced with a water-permeable reinforcing material in order to increase rigidity as mentioned hereinafter.

As the semipermeable membrane cellulose acetate membrane, polyacrylonitrile membrane, polyamide membrane or polyvinylalcohol membrane can be used.

As the water-permeable reinforcing material woven or nonwoven cloth made of polyester, nylon or cellulose are suitable.

The water-impermeable tape [2] should withstand deformation such as bending and should have not only sufficient flexibility but also sufficient water-impermeability. As the water-impermeable tape, thin films of, for example, polyethylene, polypropylene, an ethylene-vinyl acetate copolymer, non-rigid polyvinyl chloride, etc., are suitable. The modulus of rigidity of the water-impermeable tape should be lower than that of the semipermeable membrane tape.

Adhesives, e.g. made of epoxide resin, urethane resin, etc., can be used to stick the semipermeable membrane tape and the water-impermeable tape.

As the water permeable pressure supporting tube [4] of this invention, there may be used either porous and water permeable tubes produced by, for example, forming a tube by using glass fiber woven fabric, impregnating the resulting tube with a thermosetting resin such as phenol resin, epoxide resin, unsaturated polyester resin, etc., and then curing the thermosetting resin, or tubes obtained by making tiny holes in a nonporous tube made from stainless steel, glass fiber reinforced plastics, and the like. If necessary, a water-introducing material such as woven fabrics may be provided between the pressure supporting tube and the semipermeable membrane element.

When the tubular membrane module element mentioned above is used, the properties of the semipermeable membrane can stably be retained for a long period of time.

The process for producing a tubular membrane module element 5 of this invention is characterized by employing a method of connecting a semipermeable membrane tape and a water-impermeable tape along their longitudinal edges, preferably by sticking each side of a semipermeable membrane tape and each side of a water-impermeable tape together with an adhesive for forming a semipermeable membrane element. Owing to this characteristic, the process of this invention is remarkably improved in productivity as compared with the conventional method of forming a tubular film in a tube by a flow casting process one by one. As the method for sticking the semipermeable membrane tape and the water-impermeable tape to each other, there can be employed a method of, as shown in Figures 6 and 7, feeding each of the semipermeable membrane tape 1 and the water-impermeable tape 2 in a flat state, feeding an adhesive 3 onto both sides or longitudinal edges of each tape from each nozzle 6, and then sticking them to bind together. According to this method, sticking can be performed without damaging the surfaces of the semipermeable membrane tape, and moreover the resulting assembly can easily be taken off and wound up. In Figures 6 and 7, 7 and 7' show sticking-rolls and 8 and 8' show take-off rolls. As to the state of each tape at the time of sticking, at least the semipermeable membrane tape 1 should be in a flat state, however the water-impermeable tape 2 need not particularly be flat.

Figure 8    shows an example of sticking of the water-impermeable   tape 2 in a non-flat state.  When both sides of the water-impermeable tape 2 are bent inward and sticked on the semipermeable membrane tape, / as shown in Fig. 9, the subsequent forming step becomes easy.
The semipermeable membrane element,/obtained by sticking the tapes onto each other by the aforesaid method e.g. as shown in Fig.10, . is bent so that the water impermeable tape 2 may assume the form as shown in Figure 11, formed into a tubular shape as shown in Figure 12, and then inserted into a pressure supporting tube.
Figure 13 is a cross-sectional view of a tubular membrane module element obtained by     · inserting the semipermeable membrane element into the water-permeable pressure supporting tube.

If tubular membrane module elements are produced in the manner described above, tubular modules having stable performance for a long period of time can be obtained.                                       .

Figure 14   . shows an example of a tubular module 21/into which a plurality of tubular membrane module elements 5 of this invention have been incorporated. Both ends of the tubular membrane module element 5 can easily be sealed by using usual packing 11 and an adapter 12.  In Figure 14, numeral 13 denotes an O-ring, numeral 14 denotes an inlet of a solution to be treated, numeral 15 denotes an outlet of a concentrated solution;

numeral 16 denotes an outlet of a permeate (the substance which has permeated through the membrane), numeral 17 denotes a strain rod, numeral 18 denotes a nut, numeral 19 denotes a casing and numerals 9 and 10 denote end caps.

Claims:

1. A tubular membrane module element (5) comprising a water-permeable pressure supporting tube (4) and a semipermeable membrane element (20) fitted to the internal surface of the pressure supporting tube (4), **characterized** in that the semipermeable membrane element (20) is a membrane tube comprising a water-impermeable tape (2) and a semipermeable membrane tape (1) connected with each other along their longitudinal edges, the outer diameter of the membrane tube being larger than the inner diameter of the pressure supporting tube (4).

2. A tubular membrane module element (5) according to claim 1, characterized in that the water-impermeable tape (2) and the semipermeable membrane tape (1) overlap each other along their two longitudinal edges.

3. A tubular membrane module element (5) according to claim 1 or 2, characterized in that the water-impermeable tape (2) and the semipermeable membrane tape (1) are sticked together with an adhesive (3, 3').

4. A tubular membrane module element (5) according to any of claims 1 to 3, wherein the semipermeable membrane tape (1) is composed of a semipermeable membrane and a water-permeable reinforcing material provided on the back of the semipermeable membrane.

5. A tubular membrane module element (5) according to any of claims 1 to 4, wherein the water-impermeable tape (2) has a rigidity modulus lower than that of the semipermeable membrane tape (1).

6. A tubular membrane module element (5) according to any of claims 1 to 5, wherein the semipermeable membrane of the semipermeable membrane tape (1) is one member selected from the group consisting of cellulose acetate membrane, polyacrylonitrile membrane, polyamide membrane and polyvinylalcohol membrane.

7. A tubular membrane module element (5) according to any of claims 1 to 6, wherein the water-impermeable tape (2) is made of a thin film of one member selected from the group consisting of polyethylene, polypropylene, ethylenevinyl acetate copolymer and non-rigid polyvinyl chloride.

8. A process for producing a tubular membrane module element (5), particularly according to any of claims 1 to 7, comprising a water-permeable pressure supporting tube (4) and a semipermeable membrane element (20) fitted to the internal surface of the pressure supporting tube (4), characterized by
   a) forming the semipermeable membrane element (20) whose outer diameter is larger than the inner diameter of the pressure supporting tube (4) by connecting a water-impermeable tape (2) and a semipermeable membrane tape (1) along their longitudinal edges, and
   b) inserting the semipermeable membrane element (20) into the pressure supporting tube (4).

9. A process according to claim 8, characterized in that the water-impermeable tape (2) and the semipermeable membrane tape (1) are connected with each other while keeping at least the semipermeable membrane tape (1) flat.

10. A process according to claims 8 and 9, characterized in that the water-impermeable tape (2) and the semipermeable membrane tape (1) are sticked together with an adhesive (3, 3').

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

**0033148**

## EUROPEAN SEARCH REPORT

**European Patent Office**

Application number
EP 81 10 0510

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | US - A - 3 579 400 (A.J. KANYOK)<br> * Figures 1-5; column 1, line 70 - column 2, line 29; column 3, lines 11-40 * | 1-3,6 | B 01 D 13/04<br>13/00<br>31/00 |
| | US - A - 3 396 103 (M.G. HUNTING-TON)<br> * Figure 4; column 5, line 55 - column 6, line 12; column 9, lines 29-44 * | 1-4,6, 7 | |
| A | US - A - 3 715 036 (E.A.G. HAMER) | | **TECHNICAL FIELDS SEARCHED (Int. Cl.³)**<br>B 01 D 13/04<br>13/00<br>31/00 |
| A | FR - A - 2 326 958 (FR. KRUPP GmbH) | | |
| | & US - A - 4 071 453 | | |

The present search report has been drawn up for all claims

| Place of search | Date of completion of the search | Examiner |
|---|---|---|
| The Hague | 06-05-1981 | HOORNAERT |

EPO Form 1503.1  06.78